# EUROPEAN PATENT SPECIFICATION

(11) **EP 2 624 256 B1**
(45) Date of publication and mention of the grant of the patent: **13.06.2018**
(21) Application number: 11828783.8
(22) Date of filing: 14.09.2011
(51) Int. Cl.: G21D 3/00, G21D 3/04

(54) **DEVICE FOR MONITORING OPERATION OF NUCLEAR POWER PLANT**
VORRICHTUNG ZUR ÜBERWACHUNG DES BETRIEBS EINES KERNKRAFTWERKS
DISPOSITIF DE SURVEILLANCE DU FONCTIONNEMENT D'UNE CENTRALE NUCLÉAIRE

(30) Priority: 30.09.2010 JP 2010222486
(43) Date of publication of application: 07.08.2013
(73) Proprietor: Mitsubishi Heavy Industries, Ltd., Tokyo 108-8215 (JP)
(72) Inventor: FUJIMOTO, Hiroshi, Tokyo 108-8215 (JP); SHINOHARA, Hironobu, Tokyo 108-8215 (JP); AKIZUKI, Yasutake, Tokyo 108-8215 (JP); FUKUI, Toshiki, Tokyo 108-8215 (JP); TANAKA, Yuichi, Tokyo 108-8215 (JP); KIUCHI, Shinji, Tokyo 108-8215 (JP); SHIRASAWA, Hiroshi, Tokyo 108-8215 (JP)
(74) Representative: Intès, Didier Gérard André
(86) International application number: PCT/JP2011/070935
(87) International publication number: WO 2012/043223

(56) References cited:
- JP-A- 3 012 595
- JP-A- 5 333 195
- JP-A- 10 186 087
- JP-A- 10 268 086
- JP-A- 58 158 595
- JP-A- H05 333 195
- US-A- 6 049 578

## Description

### Field

The present invention relates to an operation monitoring apparatus of a nuclear power plant which can operate and manipulate a safety system and a normal use system (non-safety system).

### Background

In order to safely operate a nuclear power plant, a high level of reliability and an instrumentation and control system, which can be easily manipulated, are required. In order to ensure such an instrumentation and control system, an application of a central control panel of soft operation type, and a digitization of control system equipment and protection system equipment, are indispensable. An instrumentation and control system in a nuclear power plant is provided with a central control panel by which an operator performs an operation monitoring of the plant. This central control panel is configured by a device of normal use system (non-safety protection system) which measures process amounts of the plant and controls auxiliary machinery, such as pumps and valves, and a device of safety protection system which safely shuts down this plant when the plant is under an abnormal state.

Conventionally, in a central control room, as the central control panel, a normal use system control device and a safety protection system manipulation device are disposed.

Note that, a safety system of a nuclear power plant is described in Patent Literature 1 mentioned below.

### Citation List

### Patent Literature

Patent Literature 1: Japanese Patent Application

Laid-open No. 2002-122689
US6049578 discloses a digital plant protection system.

### Summary

### Technical Problem

Conventionally, in the central control room, the normal use system control device and the safety protection system manipulation device are disposed side by side. Namely, operators usually operate and monitor the nuclear power plant by using the normal use system control device, but under the abnormal state, it is necessary to operate the nuclear power plant by using the safety protection system manipulation device. According to the need that the plant manipulation should be performed by the different devices between the normal state and the abnormal state, their manipulation methods are different in their specifications so that their operability needs to be enhanced.

The present invention has been made for solving the above-mentioned problem, and its object is to provide an operation monitoring apparatus of a nuclear power plant which enables a simplification of an operation manipulation of the nuclear power plant, and can ensure a high level of safety of an operation control.

### Solution to Problem

According to the present invention, an operation monitoring apparatus of a nuclear power plant is defined by claim 1 and includes: a function integration manipulation device including a normal use system control function which operates and monitors a plant under a normal state, and a safety protection system control function which brings the plant under an abnormal state into a safety state; a safety protection system manipulation device including a safety protection system control function which brings the plant under the abnormal state into the safety state; and a block device which inhibits an obstruction of an actuation of the safety protection system control function by the function integration manipulation device when the function integration manipulation device is under an abnormal state.

Accordingly, when the function integration manipulation device is under the normal state, the plant under the abnormal state is brought into the safety state by using the safety protection system control function of this function integration manipulation device. On the other hand, when the function integration manipulation device is under the abnormal state, the obstruction of actuation of the safety protection system control function by the function integration manipulation device is inhibited by the block device, and the plant under the abnormal state is brought into the safety state by the safety protection system manipulation device. In this case, the function integration manipulation device makes it possible that the plant operation monitoring under the normal state and the plant control under the abnormal state are performed, and therefore, the operation manipulation in the nuclear power plant can be made easier. Moreover, when the function integration manipulation device is under the abnormal state, the obstruction of actuation of the safety protection system control function by the function integration manipulation device is inhibited by the block device, and the plant under the abnormal state is brought into the safety state by using the safety protection system manipulation device, and therefore, the plant control under the abnormal state can be surely performed so that a high level of safety of the operation control can be ensured.

In the operation monitoring apparatus of the nuclear power plant, the block device is provided to the safety protection system manipulation device.

Accordingly, after the obstruction of actuation of the safety protection system control function by the function integration manipulation device is inhibited by the block device, the plant under the abnormal state can be brought into the safety state by the safety protection system manipulation device immediately.

In the operation monitoring apparatus of the nuclear power plant, the block device is configured by an AND circuit into which a plant manipulation signal output from the function integration manipulation device, and a block signal output from the safety protection system manipulation device, are input.

Accordingly, by constituting the block device with the logic circuit of software, a simplification of the device can be performed.

Advantageously, in the operation monitoring apparatus of the nuclear power plant, the plant manipulation signal, which is output from the function integration manipulation device and the safety protection system manipulation device, and the block signal, which is output from the safety protection system manipulation device, are manual signals which are output by a manipulation of an operator.

Accordingly, by the manual manipulation of the operator, the plant control operation under the abnormal state, and the actuation inhabitation of the safety protection system control function in the function integration manipulation device can be performed, and the operation manipulation in the nuclear power plant can be made easier.

Advantageously, in the operation monitoring apparatus of the nuclear power plant, the plant is brought into the safety state when one of a plant manual manipulation signal to be output from the function integration manipulation device and the safety protection system manipulation device, and a plant automatic manipulation signal to be output based on a process amount of the plant, is output.

Accordingly, by any one of the plant manual shut down signal and the plant automatic shut down signal, the plant under the abnormal state can be shut down, and a high level of safety of the operation control can be ensured.

Advantageously, in the operation monitoring apparatus of the nuclear power plant, a plant automatic manipulation ON signal or a plant automatic manipulation OFF signal, which is output from the function integration manipulation device and the safety protection system manipulation device, is prioritized over a plant manual manipulation ON signal or a plant manual manipulation OFF signal.

Accordingly, the obstruction of actuation of the safety system signal can be prevented, and a high level of operability can be realized.

### Advantageous Effects of Invention

According to the operation monitoring apparatus of the nuclear power plant of the present invention, there is disposed the block device which inhibits the obstruction of actuation of the safety protection system control function by the function integration manipulation device when the function integration manipulation device is under the abnormal state, thereby capable of simplifying the operation manipulation in the nuclear power plant, and ensuring a high level of safety of the operation control. Brief Description of Drawings
FIG. 1 is a schematic diagram illustrating a control block in an operation monitoring apparatus of a nuclear power plant according to an embodiment of the present invention.
FIG. 2 is a schematic diagram illustrating a central control room in the operation monitoring apparatus of the nuclear power plant of the present embodiment.
FIG. 3 is a schematic diagram illustrating a function integration VDU and a safety protection system VDU in the operation monitoring apparatus of the nuclear power plant of the present embodiment.

### Description of Embodiments

A preferred embodiment of the operation monitoring apparatus of the nuclear power plant according to the present invention will be described hereunder with reference to the accompanied drawings. Note that, the present invention is not limited by this embodiment. Embodiment

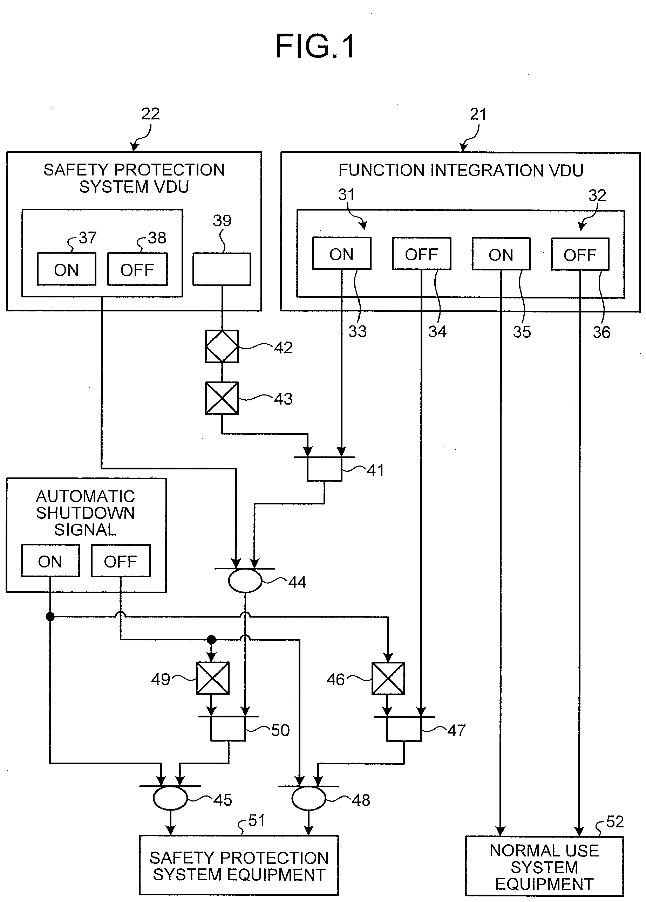

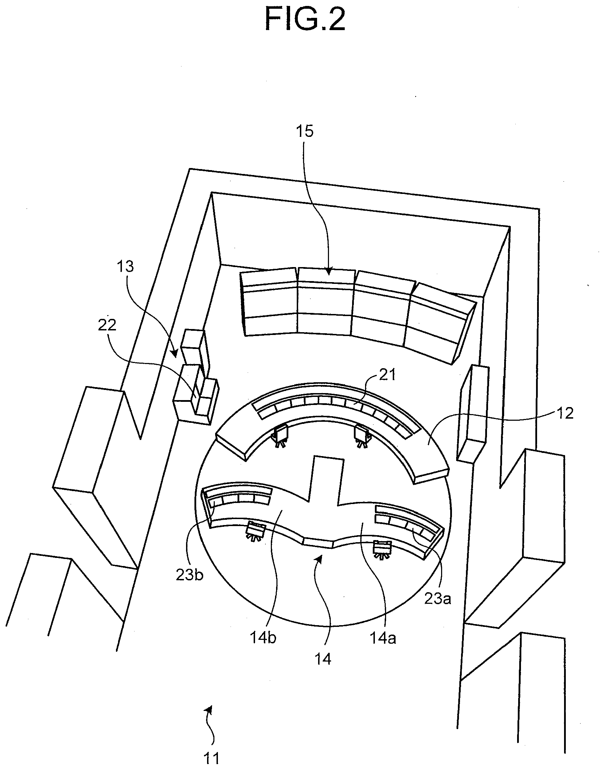

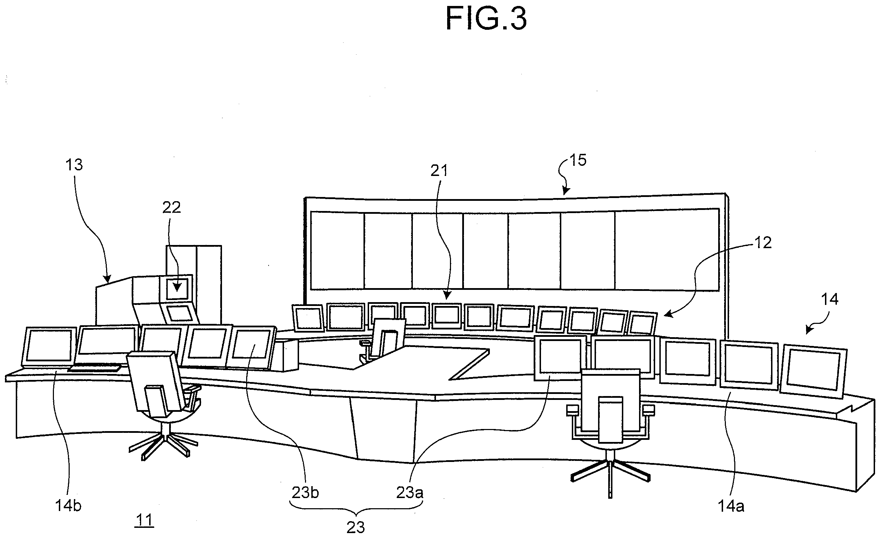

FIG. 1 is the schematic diagram illustrating the control block in the operation monitoring apparatus of the nuclear power plant according to one embodiment of the present invention, FIG. 2 is the schematic diagram illustrating the central control room in the operation monitoring apparatus of the nuclear power plant of the present embodiment, and FIG. 3 is the schematic diagram illustrating the function integration VDU and the safety protection system VDU in the operation monitoring apparatus of the nuclear power plant of the present embodiment.

In the operation monitoring apparatus of the nuclear power plant of the present embodiment, as illustrated in FIG. 2 and FIG. 3, a central control room 11 is a substantially closed room, and a first operation console 12, a second operation console 13, an operation command console 14, and a large indicator panel 15, are disposed therein. In this case, the large indicator panel 15 is disposed at the foremost portion, and the first operation console 12 is disposed toward the large indicator panel 15 so as to be opposite to the front surface of this large indicator panel 15. Moreover, adjacent to the first operation console 12, the second operation console 13 is disposed on the wall surface of the central control room 11. Then, the operation command console 14 is disposed toward the large indicator panel 15 so as to be opposite to the front surface of the large indicator panel 15, and in a backward position.

Namely, in the central control room 11, the first operation console 12 and the operation command console 14 are disposed at the center thereof, and the second operation console 13 is disposed close to the wall surface of the central control room 11 adjacent to the first operation console 12. Specifically, the operation command console 14 is disposed at the substantially central portion of the circle which is described at the middle portion of the central control room 11, and the first operation console 12 is disposed so as to define an arc of its circle on the large indicator panel 15 side. The second operation console 13 is disposed outside of this circle so as to be close to the wall surface of the central control room 11.

Then, a function integration VDU (function integration manipulation device) 21 is mounted on the first operation console 12, and a safety protection system VDU (safety protection system manipulation device) 22 is mounted on the second operation console 13. This function integration VDU 21 includes a normal use system control function which operates and monitors this plant when the plant is under the normal state, and a safety protection system control function which safely shuts down this plant

(i.e., brings this plant into the safety state) when the plant is under the abnormal state. On the other hand, the safety protection system VDU 22 is a VDU for a backup of the safety protection system control function in the function integration VDU 21, and includes a safety protection system control function which safely shuts down this plant (i.e., brings this plant into the safety state) when the plant is under the abnormal state. Note that, VDU stands for Visual Display Unit.

Moreover, the first operation console 12 (function integration VDU 21) and the second operation console 13 (safety protection system VDU 22) are manipulated by operators. On the other hand, the operation command console 14 is manipulated by the duty director who provides commands to the operators, and a management VDU 23 is mounted thereon. In the present embodiment, the operation command console 14 is constituted by a supervision command console 14a (VDU for supervisor 23a), and a technology command console 14b (VDU for technical expert 23b).

In the central control room 11 of the operation monitoring apparatus of the nuclear power plant of the thus constituted present embodiment, there is disposed the block device which inhibits an actuation of the safety protection system control function by this function integration VDU 21 (an obstruction of actuation) when the function integration VDU 21 is under the abnormal state. Here, this block device is disposed in the second operation console 13 (safety protection system VDU 22).

This block device is configured by an AND circuit (software) into which a plant shutdown signal (plant manipulation signal) output from the function integration VDU 21, and a block signal output from the safety protection system VDU 22, are input. In this case, the plant shutdown signal output from the function integration VDU 21 and the safety protection system VDU 22, and the block signal output from the safety protection system VDU 22, are manual signals which are output by manipulations of the operator. Then, the nuclear power plant is shut down when one of the plant manual shutdown signal to be output from the function integration VDU 21 and the safety protection system VDU 22, and the plant automatic shutdown signal to be output based on a process amount of the plant, is output.

Namely, as illustrated in FIG. 1, the function integration VDU 21 includes a function of a safety protection system VDU 31 and a function of a normal use system (non-safety protection system) VDU 32. Namely, as the safety protection system VDU 31, an ON manipulation switch 33 and an OFF manipulation switch 34, which stop actuations of various machinery in safety protection system equipment 51, are disposed. As the normal use system VDU 32, an ON manipulation switch 35 and an OFF manipulation switch 36, which stop actuations of various machinery in normal use system equipment 52, are disposed. In this case, the respective manipulation switches 33, 34 in the safety protection system VDU 31, and the respective manipulation switches 35, 36 in the normal use system VDU 32, are illustrated here as a single switch for each of them, but in fact, a plurality of switches are disposed corresponding to the various machinery.

The safety protection system VDU 22 includes an ON manipulation switch 37 and an OFF manipulation switch 38 which stop actuations of various machinery in the safety protection system equipment 51, and a shut-off manipulation switch 39 which actuates the block device. In this case, the respective manipulation switches 37, 38, 39 in the safety protection system VDU 22 are illustrated here as a single switch for each of them, but in fact, a plurality of switches are disposed according to the various machinery.

A signal of the ON manipulation switch 33 of the safety protection system VDU 31 is input into an AND circuit 41. Moreover, a signal of the shut-off manipulation switch 39 of the safety protection system VDU 22 is input into the AND circuit 41 via a latch circuit 42 and a NOT circuit 43. In this case, when the shut-off manipulation switch 39 of the safety protection system VDU 22 is not manipulated, an ON signal "0" is inverted at the NOT circuit 43 into an ON signal "1" so as to be input into the AND circuit 41. When the ON manipulation switch 33 of the safety protection system VDU 31 is manipulated so that an ON signal "1" is input into the AND circuit 41, this AND circuit 41 outputs an ON signal "1".

The signal, which was output from the AND circuit 41, is input into an OR circuit 44. Moreover, the signals, which were output from the ON manipulation switch 37 and the OFF manipulation switch 38 of the safety protection system VDU 22, are input into the OR circuit 44. In this case, when an ON signal "1" from the AND circuit 41, or an ON signal "1" from the ON manipulation switch 37, is input into the OR circuit 44, this OR circuit 44 outputs an ON signal "1". Note that, with regard to this safety protection system VDU 22, it will be described in a way that, when the ON manipulation switch 37 is manipulated, an ON signal "1" is output, and when the OFF manipulation switch 38 is manipulated, or neither of the switches is manipulated, an ON signal "0", i.e., an OFF signal "1", is output.

On the other hand, when the shut-off manipulation switch 39 of the safety protection system VDU 22 is manipulated, an ON signal "1" is inverted at the NOT circuit 43 into an ON signal "0" so as to be input into the AND circuit 41, and even when the ON manipulation switch 33 of the safety protection system VDU 31 is manipulated so that an ON signal "1" is input into the AND circuit 41, this AND circuit 41 does not output an ON signal "1". Namely, between the safety protection system VDU 31 of the function integration VDU 21 and the safety protection system VDU 22, a process of the safety protection system VDU 22 is prioritized.

The respective manipulation switches 33, 34 of the safety protection system VDU 31, and the respective manipulation switches 35, 36 of the normal use system VDU 32 in the above-mentioned function integration VDU 21, and the respective manipulation switches 37, 38, 39 in the safety protection system VDU 22, are configured to be manually manipulated by the operator. When the operator finds an occurrence of abnormal event in the safety protection system equipment 51, a manual shutdown signal is output so that this safety protection system equipment 51 is safely shut down.

On the other hand, multiple sensors for detecting the states of various machinery are disposed in the nuclear power plant, and a control device, which is not shown, monitors the operation state based on the detected results of the respective sensors. Then, when the control device detects an occurrence of abnormal event in the safety protection system equipment 51, an automatic shutdown signal is output so as to safely shut down this safety protection system equipment 51.

This ON signal of automatic shutdown is input into the OR circuit 45, and input into the AND circuit 47 via the NOT circuit 46. Moreover, the OFF signal of automatic shutdown is input into the OR circuit 48, and input into the AND circuit 50 via the NOT circuit 49. Then, the signal, which was output from the AND circuit 50, is input into the OR circuit 45, on the other hand, the signal, which was output from the OFF manipulation switch 34, is input into the OR circuit 48 via the AND circuit 47.

In this case, when the control device has output an ON signal of automatic shutdown, an ON signal "1" is input into the OR circuit 45, and regardless of the signals from the function integration VDU 21 and the safety protection system VDU 22, the OR circuit 45 outputs an automatic shutdown ON signal "1" for shutting down the safety protection system equipment 51. Moreover, when an ON signal of manual shutdown has been output from the function integration VDU 21 and the safety protection system VDU 22 by a manipulation of an operator, an ON signal "1" is input into the OR circuit 45, and regardless of an ON signal of automatic shutdown, the OR circuit 45 outputs an automatic shutdown ON signal "1" for shutting down the safety protection system equipment 51.

On the other hand, when the control device has not output an ON signal of automatic shutdown, the ON signal "0" is input into the OR circuit 45. Moreover, when an operator has not manipulated, and an ON signal of manual shutdown has not been output from the function integration VDU 21 and the safety protection system VDU 22, an ON signal "0" is input into the OR circuit 45. Therefore, the OR circuit 45 never outputs an automatic shutdown ON signal for shutting down the safety protection system equipment 51.

Moreover, when the control device has output an OFF signal of automatic shutdown, an OFF signal "1" is input into the OR circuit 48, and regardless of the signals from the function integration VDU 21 and the safety protection system VDU 22, the OR circuit 48 outputs an automatic shutdown OFF signal "1" for not shutting down the safety protection system equipment 51. Moreover, when an OFF signal "1" of manual shutdown for not shutting down the safety protection system equipment 51 has output from the function integration VDU 21 and the safety protection system VDU 22 by a manipulation of an operator, an OFF signal "1" is input into the OR circuit 48, and regardless of an OFF signal of automatic shutdown, the OR circuit 48 outputs an automatic shutdown OFF signal "1" for not shutting down the safety protection system equipment 51.

On the other hand, when the control device has not output an OFF signal of automatic shutdown, an OFF signal "0" is input into the OR circuit 48. Moreover, when an operator has not manipulated, and an ON signal of manual shutdown has not been output from the function integration VDU 21 and the safety protection system VDU 22, an ON signal "0" is input into the OR circuit 45. Therefore, the OR circuit 48 never outputs an automatic shutdown ON signal "1" for shutting down the safety protection system equipment 51.

Furthermore, when an ON signal "1" of automatic shutdown has been output, this ON signal "1" is inverted by the NOT circuit 46 into an ON signal "0" so as to be input into the AND circuit 47, and therefore, even when an operator manipulates the OFF manipulation switch 34 so as to output an OFF signal "1" of manual shutdown, the AND circuit 47 does not output an OFF signal "1". Namely, when an ON signal "1" of automatic shutdown has been output, a process of an ON signal "1" of automatic shutdown is prioritized over an OFF signal "1" of manual shutdown from the safety protection system VDU 31 of the function integration VDU 21 and the safety protection system VDU 22. Note that, when an ON signal "1" of automatic shutdown has not been output, an ON signal "0" is inverted by the NOT circuit 46 into an ON signal "1" so as to be input into the AND circuit 47, and therefore, when an operator manipulates the OFF manipulation switch 34 so as to output an OFF signal "1" of manual shutdown, the AND circuit 47 can output an OFF signal "1".

On the other hand, when an OFF signal of automatic shutdown has been output, this OFF signal "1" is inverted by the NOT circuit 49 into an ON signal "0" so as to be input into the AND circuit 50, and therefore, even when an operator manipulates the ON manipulation switch 33 so as to output an ON signal "1" of manual shutdown, the AND circuit 47 does not output an ON signal "1". Namely, when an OFF signal "1" of automatic shutdown has been output, a process of an OFF signal "1" of automatic shutdown is prioritized over an ON signal "1" of manual shutdown from the safety protection system VDU 31 of the function integration VDU 21 and the safety protection system VDU 22. Note that, when an OFF signal "1" of automatic shutdown has not been output, an OFF signal "0" is inverted by the NOT circuit 49 into an ON signal "1" so as to be input into the AND circuit 50, and therefore, when an operator manipulates the ON manipulation switch 33 so as to output an ON signal "1" of manual shutdown, the ON signal "1" is input into the AND circuit 50 via the OR circuit 11, and this AND circuit 50 can output an ON signal "1".

Note that, when an operator manipulates the ON manipulation switch 35 or the OFF manipulation switch 36 at the normal use system VDU 32 of the function integration VDU 21, an ON signal "1" of manual shutdown or an OFF signal "1" of manual shutdown is output to the normal use system equipment 52.

In the present embodiment, as mentioned above, the block device is constituted by the AND circuit 41 into which the plant shutdown signal (ON signal "1" of automatic shutdown) output from the safety protection system VDU 31 of the function integration VDU 21, and the block signal (ON signal "1") output from the shut-off manipulation switch 39 of the safety protection system VDU 22, are input.

Here, operations of the function integration VDU 21 and the safety protection system VDU 22 in the operation monitoring apparatus of the nuclear power plant of the present embodiment will be described.

Usually, the operators perform the operation monitoring of the nuclear power plant by using the function integration VDU 21. Then, when an abnormal event was found by the operation state of the plant, and a manipulation is necessary for the safety protection system VDU 31, the ON manipulation switch 33 of the safety protection system VDU 31 is manipulated so as to output an ON signal "1" of manual shutdown. As a result, the ON signal "1" of manual shutdown output from the ON manipulation switch 33 is input into the AND circuit 41. At this time, the safety protection system VDU 31 of the function integration VDU 21 operates in the normal state so that the shut-off manipulation switch 39 of the safety protection system VDU 22 is not manipulated, and an ON signal "0" is inverted by the NOT circuit 43 into an ON signal "1" so as to be input into the AND circuit 41. Therefore, the AND circuit 41 outputs an ON signal "1".

The OR circuit 44 outputs the ON signal "1" which was input from the AND circuit 41. At the AND circuit 50, because an OFF signal of automatic shutdown has not been output, an OFF signal "0" is inverted by the NOT circuit 49 into an OFF signal "1" so as to be input into the AND circuit 50. The AND circuit 50 outputs an ON signal "1", and this ON signal "1" of manual shutdown is input into the safety protection system equipment 51 via the OR circuit 45, thereby safely shutting down the same.

Then, when an operator found an abnormal event in the safety protection system VDU 31 of the function integration VDU 21, the operator disables the manipulation by this safety protection system VDU 31, and performs a manipulation by the safety protection system VDU 22. Namely, when an operator found an abnormal event in the safety protection system VDU 31, the operator manipulates the shut-off manipulation switch 39 of the safety protection system VDU 22. Then, an ON signal "1" is inverted by the NOT circuit 43 into an ON signal "0" so as to be input into the AND circuit 41. Therefore, the operator manipulates the ON manipulation switch 33 of the safety protection system VDU 31 so as to output an ON signal "1" of manual shutdown. Even when this ON signal "1" of manual shutdown is input into the AND circuit 41, the AND circuit 41 never outputs an ON signal "1" of manual shutdown because the ON signal "0" has been input into the same from the shut-off manipulation switch 39 of the safety protection system VDU 22.

The safety protection system VDU 31 of the function integration VDU 21 is out of order so as to be incapable of being manipulated, and therefore, the operator manipulates the ON manipulation switch 37 of the safety protection system VDU 22 so as to output an ON signal "1" of manual shutdown. Then, the ON signal "1" of manual shutdown, which was output from the ON manipulation switch 37, is output into the OR circuit 44 so as to output its ON signal "1". As mentioned above, the OFF signal "1" of automatic shutdown has been input into the AND circuit 50, and therefore, the AND circuit 50 outputs an ON signal "1", and this ON signal "1" of manual shutdown is input into the safety protection system equipment 51 via the OR circuit 45 so as to safely shut down the same.

Like this, in the operation monitoring apparatus of the nuclear power plant of the present embodiment, the function integration VDU 21 including the normal use system VDU 32 for operating and monitoring the nuclear power plant under the normal state, and the safety protection system VDU 31 for shutting down the nuclear power plant under the abnormal state, is disposed, and also, the safety protection system VDU 22 for shutting down the nuclear power plant under the abnormal state is disposed, and further, there is disposed the block device for inhibiting the actuation of the safety protection system VDU 31 when the function integration VDU 21 is under the abnormal state.

Therefore, when the function integration VDU 21 is under the normal state, the nuclear power plant under the abnormal state is safely shut down by using the safety protection system VDU 31 of this function integration VDU 21, on the other hand, when this function integration VDU 21 is under the abnormal state, the actuation of the safety protection system VDU 31 in the function integration VDU 21 is inhibited by the block device, and the nuclear power plant under the abnormal state is shut down by using the safety protection system VDU 22. In this case, by the function integration VDU 21, the nuclear power plant control under the normal state and the plant shutdown under the abnormal state can be performed, and therefore, the operation manipulation in the nuclear power plant can be made easier. Moreover, when the function integration VDU 21 is under the abnormal state, by the block device, the actuation of the safety protection system VDU 31 by the function integration VDU 21 is inhibited, and the nuclear power plant under the abnormal state is shut down by using the safety protection system VDU 22 as a backup, so that the plant shutdown under the abnormal state can be surely performed, and a high level of safety of the operation control can be ensured.

Moreover, in the operation monitoring apparatus of the nuclear power plant of the present embodiment, the block device is disposed at the safety protection system VDU 22. Therefore, after the actuation of the safety protection system VDU 31 in the function integration VDU 21 is inhibited by the block device, the nuclear power plant under the abnormal state can be immediately shut down by using the safety protection system VDU 22.

Moreover, in the operation monitoring apparatus of the nuclear power plant of the present embodiment, the block device is constituted by the AND circuit 41 into which the plant shutdown signal output from the safety protection system VDU 31 of the function integration VDU 21, and the block signal output from the safety protection system VDU 22, are input. Therefore, by constituting the block device with a logic circuit, a simplification of the apparatus can be enabled.

Moreover, in the operation monitoring apparatus of the nuclear power plant of the present embodiment, the plant shutdown signal output from the function integration VDU 21 and the safety protection system VDU 31, and the block signal output from the safety protection system VDU 22, are manual signals which are output by the manipulation of the operator. Therefore, by the manual manipulation of the operator, the nuclear power plant shutdown workings under the abnormal state, and the actuation inhabitation of the safety protection system VDU 31 in the function integration VDU 21, can be performed, and therefore, the simplification of the operation manipulation in the nuclear power plant can be enabled.

Moreover, in the operation monitoring apparatus of the nuclear power plant of the present embodiment, the nuclear power plant is shut down when one of the plant manual shutdown signal to be output from the function integration VDU 21 and the safety protection system VDU 22, and the plant automatic shutdown signal to be output based on a process amount of the nuclear power plant, is output. Therefore, by either of the plant manual shutdown signal or the plant automatic shutdown signal, the nuclear power plant under the abnormal state can be shut down, and a high level of safety of the operation control can be ensured.

Moreover, in the operation monitoring apparatus of the nuclear power plant of the present embodiment, the plant automatic shutdown ON signal or the plant automatic shutdown OFF signal is prioritized over the plant manual shutdown ON signal or the plant manual shutdown OFF signal which is output from the function integration VDU 21 and the safety protection system VDU 22. Therefore, an erroneous manipulation by the operator can be prevented so that a high level of safety of the operation control can be ensured.

Note that, in the above-mentioned embodiment, it is described that the safety protection system shuts down the plant under the abnormal state, but, this safety protection system not only shuts down the plant, but also starts up or manipulates the same. Namely, the safety protection system is intended to bring the plant under the abnormal state into the safety state. Moreover, it is described that, when the function integration manipulation device is under the abnormal state, the block device stops the actuation of the safety protection system control function by this function integration manipulation device, but, the block device inhibits the obstruction of actuation in the safety protection system control function.

### Industrial Applicability

The operation monitoring apparatus of the nuclear power plant according to the present invention makes it possible that, by disposing the block device which inhibits the obstruction of actuation of the safety protection system control function by this function integration manipulation device when the function integration manipulation device is under the abnormal state, a simplification of the operation manipulation in the nuclear power plant is enabled, and further, a high level of safety of the operation control can be ensured, and the operation monitoring apparatus is applicable to any nuclear power plant.

### Reference Signs List

11 central control room
12 first operation console
13 second operation console
14 operation command console
15 large indicator panel
21 function integration VDU (function integration manipulation device)
22 safety protection system VDU (safety protection system manipulation device)
31 safety protection system VDU
32 normal use system (non-safety protection system) VDU
39 shut-off manipulation switch (block device)
41 AND circuit (block device)
42 latch circuit (block device)
43 NOT circuit (block device)
44 OR circuit
45 OR circuit
46 NOT circuit
47 AND circuit
48 OR circuit
49 NOT circuit
50 AND circuit
51 safety protection system equipment
52 normal use system equipment

## Claims

1. An operation monitoring apparatus of a nuclear power plant, comprising:
a function integration manipulation device (21) including a normal use system control function (32) configured to operate and monitor a plant under a normal state, and a safety protection system control function (31) configured to bring the plant under an abnormal state into a safety state;
a safety protection system manipulation device (22) including a safety protection system control function (31) configured to bring the plant under the abnormal state into the safety state; and
a block device (41) configured to inhibit an obstruction of an actuation of the safety protection system control function (31) by the function integration manipulation device (21) when the function integration manipulation device (21) is under an abnormal state,
wherein the block device (41)is provided to the safety protection system manipulation device (22)
**characterized in that** the block device (41) is configured by an AND circuit into which a plant manipulation signal output from the function integration manipulation device (21), and a block signal output from the safety protection system manipulation device (22), are input.

2. The operation monitoring apparatus of the nuclear power plant according to claim 1, wherein the plant manipulation signal, which is output from the function integration manipulation device (21) and the safety protection system manipulation device (22), and the block signal, which is output from the safety protection system manipulation device (22), are manual signals which are output by a manipulation of an operator.

3. The operation monitoring apparatus of the nuclear power plant according to claim 2, wherein the plant is configured to be brought into the safety state when one of a plant manual manipulation signal to be output from the function integration manipulation device (21) and the safety protection system manipulation device (22), and a plant automatic manipulation signal to be output based on a process amount of the plant, is output.

4. The operation monitoring apparatus of the nuclear power plant according to claim 3, wherein a plant automatic manipulation ON signal or a plant automatic manipulation OFF signal, which is output from the function integration manipulation device (21) and the safety protection system manipulation device (22), is prioritized over a plant manual manipulation ON signal or a plant manual manipulation OFF signal.

## Patentansprüche

1. Betriebsüberwachungsvorrichtung eines Kernkraftwerkes, umfassend:
eine Funktionsintegrationsbedienvorrichtung (21), die eine Normalnutzungssystemsteuerungsfunktion (32) enthält, die dafür konfiguriert ist, eine Anlage unter einem Normalzustand zu betreiben und zu überwachen, und eine Sicherheitsschutzsystemsteuerungsfunktion (31) enthält, die dafür konfiguriert ist, die Anlage unter einem Anomaliezustand in einen Sicherheitszustand zu versetzen,
eine Sicherheitsschutzsystembedienvorrichtung (22), die eine Sicherheitsschutzsystemsteuerungsfunktion (31) enthält, die dafür konfiguriert ist, die Anlage unter dem Anomaliezustand in den Sicherheitszustand zu versetzen, und
eine Sperrvorrichtung (41), die dafür konfiguriert ist, die Behinderung einer Betätigung der Sicherheitsschutzsystemsteuerungsfunktion (31) durch die Funktionsintegrationbedienvorrichtung (21) zu verhindern, wenn sich die Funktionsintegrationbedienvorrichtung (21) unter einem Anomaliezustand befindet,
wobei die Sperrvorrichtung (41) an der Sicherheitsschutzsystembedienvorrichtung (22) angeordnet ist,
**dadurch gekennzeichnet, dass** die Sperrvorrichtung (41) durch eine UND-Schaltung konfiguriert ist, in die ein Anlagenbediensignalausgang von der Funktionsintegrationbedienvorrichtung (21) und ein Sperrsignalausgang von der Sicherheitsschutzsystembedienvorrichtung (22) eingespeist werden.

2. Betriebsüberwachungsvorrichtung des Kernkraftwerkes nach Anspruch 1, wobei das Anlagenbediensignal, das von der Funktionsintegrationbedienvorrichtung (21) und der Sicherheitsschutzsystembedienvorrichtung (22) ausgegeben wird, und das Sperrsignal, das von der Sicherheitsschutzsystembedienvorrichtung (22) ausgegeben wird, manuelle Signale sind, die durch eine Bedienung eines Bedieners ausgegeben werden.

3. Betriebsüberwachungsvorrichtung des Kernkraftwerkes nach Anspruch 2, wobei die Anlage dafür konfiguriert ist, in den Sicherheitszustand versetzt zu werden, wenn eines von einem manuellen Anlagenbediensignal, das von der Funktionsintegrationbedienvorrichtung (21) und der Sicherheitsschutzsystembedienvorrichtung (22) auszugeben ist, und einem automatischen Anlagenbediensignal, das auf der Grundlage eines Prozessumfangs der Anlage auszugeben ist, ausgegeben wird.

4. Betriebsüberwachungsvorrichtung des Kernkraftwerkes nach Anspruch 3, wobei ein automatisches Anlagenbedienungs-EIN-Signal oder ein automatisches Anlagenbedienungs-AUS-Signal, das von der Funktionsintegrationbedienvorrichtung (21) und der Sicherheitsschutzsystembedienvorrichtung (22) ausgegeben wird, Priorität hat vor einem manuellen Anlagenbedienungs-EIN-Signal oder einem manuellen Anlagenbedienungs-AUS-Signal.

## Revendications

1. Appareil de surveillance de fonctionnement de centrale nucléaire, comprenant :
un dispositif de manipulation d'intégration de fonction (21) comprenant une fonction de commande de système d'utilisation normale (32) configurée pour mettre en oeuvre et surveiller une installation dans un état normal, et une fonction de commande de système de protection de sécurité (31) configurée pour amener l'installation dans un état anormal dans un état de sécurité ;
un dispositif de manipulation de système de protection de sécurité (22) comprenant une fonction de commande de système de protection de sécurité (31) configurée pour amener l'installation dans l'état anormal dans l'état de sécurité ; et
un dispositif de bloc (41) configuré pour lever un empêchement d'un actionnement de la fonction de commande de système de protection de sécurité (31) par le dispositif de manipulation d'intégration de fonction (21) lorsque le dispositif de manipulation d'intégration de fonction (21) est dans un état anormal,
dans lequel le dispositif de bloc (41) est prévu pour le dispositif de manipulation de système de protection de sécurité (22),
**caractérisé en ce que** le dispositif de bloc (41) est configuré par un circuit ET auquel un signal de manipulation d'installation, délivré par le dispositif de manipulation d'intégration de fonction (21), et un signal de bloc, délivré par le dispositif de manipulation de système de protection de sécurité (22), sont appliqués.

2. Appareil de surveillance de fonctionnement de centrale nucléaire selon la revendication 1, dans lequel le signal de manipulation d'installation, qui est délivré par le dispositif de manipulation d'intégration de fonction (21) et le dispositif de manipulation de système de protection de sécurité (22), et le signal de bloc, qui est délivré par le dispositif de manipulation de système de protection de sécurité (22), sont des signaux manuels qui sont délivrés par une manipulation d'un opérateur.

3. Appareil de surveillance de fonctionnement de centrale nucléaire selon la revendication 2, dans lequel l'installation est configurée pour être amenée dans l'état de sécurité lorsque l'un d'un signal de manipulation manuelle d'installation, délivré par le dispositif de manipulation d'intégration de fonction (21) et le dispositif de manipulation de système de protection de sécurité (22), et d'un signal de manipulation automatique d'installation, délivré sur la base d'une quantité de processus de l'installation, est délivré.

4. Appareil de surveillance de fonctionnement de centrale nucléaire selon la revendication 3, dans lequel un signal MARCHE de manipulation automatique d'installation ou un signal ARRÊT de manipulation automatique d'installation, qui est délivré par le dispositif de manipulation d'intégration de fonction (21) et le dispositif de manipulation de système de protection de sécurité (22), reçoit la priorité sur un signal MARCHE de manipulation manuelle d'installation ou un signal ARRÊT de manipulation manuelle d'installation.
